# EUROPEAN PATENT SPECIFICATION

(11) **EP 4 033 917 B1**
(45) Date of publication and mention of the grant of the patent: **30.04.2025**
(21) Application number: 20789375.1
(22) Date of filing: 25.09.2020
(51) Int. Cl.: A23L 7/122, A23L 7/126, A23L 29/212, A23L 29/30, A23P 10/20

(54) **METHOD FOR PREPARING A FOOD PRODUCT WITH REDUCED SUGAR GRAIN BINDER COMPOSITION**
VERFAHREN ZUR HERSTELLUNG EINES NAHRUNGSMITTELS MIT ZUCKERARMER BINDEMITTELZUSAMMENSETZUNG AUF GETREIDEBASIS
PROCÉDÉ DE PRÉPARATION D'UN PRODUIT ALIMENTAIRE COMPRENANT UNE COMPOSITION DE LIANT À BASE DE CÉRÉALES À TENEUR RÉDUITE EN SUCRE

(30) Priority: 25.09.2019 US 201962905591 P; 25.09.2019 US 201962905969 P
(43) Date of publication of application: 03.08.2022
(60) Divisional application: 25166843.0
(73) Proprietor: Kellanova, Battle Creek, MI 49016 (US)
(72) Inventor: STINSON, Matthew J., Solana Beach, CA 92075 (US); CLARK, Angela Kay, Bellevue, MI 49021 (US); NAKASHIMA, Matthew Masataro, Galesburg, MI 49053 (US); MULLINS III, Charles, Kalamazoo, MI 49009 (US); MUHAMMAD-TAHIR, Zarini, Battle Creek, MI 49015 (US)
(74) Representative: Pons Ariño, Angel
(86) International application number: PCT/US2020/052643
(87) International publication number: WO 2021/062101

(56) References cited:
- WO-A1-2009/009720
- WO-A1-2015/196061
- US-A- 4 038 427
- US-A1- 2005 255 218
- US-A1- 2017 245 508

## Description

### TECHNICAL FIELD

This disclosure relates to binder compositions, and more particularly, to reduced or no added sugar grain binder compositions, food products thereof, such as clustered granola-type products, including reduced or no added sugar grain binder compositions, and methods of preparing food products, such as the clustered granola-type products, including the reduced or no added sugar grain binder compositions.

### BACKGROUND

Conventional binder compositions used in snack bars and clusters, for example, typically include large amounts of corn syrup or other intentionally added sugars to provide the required viscosity and cohesion of the binder to hold the bar or clusters together. In many cases, the total amount of intentionally added sugar may be 20 percent and up to about 35 percent of the food. However, consumers often desire reduced levels of added sugar in food products and updates in labeling requirements now require foods to separate label added sugar amounts in line with consumer interests. Thus, food manufacturers tend to control the amounts of intentionally added sugars into their foods to be consistent with consumer interests. Sugar alcohols are commonly used alternatives for added sugars in food binder systems. However, replacing added sugars with sugar alcohols is also not widely accepted by consumers. In many cases, consumers also desire reduced levels of sugar alcohols in foods because higher amounts of such polyols may have undesired side effects by some when consumed and are often less accepted by diabetics.

In the state of the art it is known the document US2017245508 which discloses a method for preparing a food product and a food product thereof including a grain-based binder and being essentially free of added sugar. The method includes preparing a cooked grain flour and then hydrating the cooked grain flour either during or after cooking with a liquid to form a binder composition. The binder composition and one or more food ingredients are combined to form an agglomerate, and the agglomerate is thermally processed to obtain the food product.

Reducing traditional sugars and sugar alcohols in binder systems poses problems in manufacturing and achieving a functional binder. When forming binder systems with low levels or no added sugars or sugar alcohols, flours and starches may be a replacement to provide binder viscosity and cohesion in food products. However, the rapid viscosity build of flours and starches tend to make processing a challenge with water-based binding systems. Often, the starch absorbs water so quickly with a rapid increase in viscosity that use of the components as a reduced-sugar binder in food is difficult because the resultant high viscosity poses challenges in fully coating any dry components, such as granola or other inclusions within the binder.

### SUMMARY OF THE DISCLOSURE

The present disclosure relates to a method for preparing a food product as it is stated in the claims.

In one approach or embodiment, a method for preparing a food product including a grain-based binder and being essentially free of intentionally added sugars is described in this disclosure. The method includes coating a grain and/or grain flour with a fat or oil to form a grain flour slurry wherein a grain particle thereof is coated or protected with a layer of the fat or oil; combining the grain flour slurry with one or more liquid ingredients to form a binder composition wherein the binder composition including the grain flour slurry maintains a viscosity of about 200 BU or less before thermal processing; mixing the binder composition and one or more dry ingredients to form an agglomerate; and thermally processing the agglomerate to activate the grain flour to increase the binder viscosity to form the agglomerate into a cohesive food product.

In other embodiments or approaches of this disclosure, the method of the prior paragraphs of this Summary can be combined or include optional features in any combination thereof. The features include any of: wherein the thermally processing includes baking at a temperature of about 148.89 °C (300 °F) to about 176.67 °C (350 °F) for about 5 minutes to about 60 minutes; and/or wherein the thermally processing generates steam to at least partially degrade the layer of fat or oil coating the grain particle to allow hydration of the pre-gelatinized whole oat flour particle; and/or wherein the food product includes about 30 to about 50 percent of the binder composition and about 50 to about 70 percent of the dry ingredients based on the total weight of the food product; and/or wherein the binder composition has a viscosity of 200 BU or less at temperatures about 100 °C or less and, preferably, as a maximum viscosity of 80 to 130 BU at temperatures of about 95 °C and, preferably, at temperatures of about 60 to about 95 °C; and/or wherein the pre-gelatinized whole oat flour is a high amylopectin containing pre-gelatinized whole oat flour; and/or wherein the pre-gelatinized whole oat flour has about 1 to about 4 percent water, about 5 to about 10 fat, about 10 to about 15 percent protein, and less than about 1 percent fiber; and/or wherein the oil or fat is selected from the group consisting of a canola oil, sunflower oil, soybean oil, corn oil, cottonseed oil, peanut oil, safflower oil, palm oil, coconut oil, rice bran oil, olive oil, and/or sesame oil, and combinations thereof; and/or wherein the high amylopectin pre-gelatinized whole oat flour includes an amylopectin to amylose ratio of about 75 to 98 percent amylopectin and about 2 to about 25 percent amylose;; and/or wherein the high amylopectin pre-gelatinized whole oat flour has about 1 to about 4 percent water, about 5 to about 10 fat, about 10 to about 15 percent protein, and less than about 0.5 percent fiber; and/or wherein the one or more liquid ingredients include fruit juice, fruit puree, fruit concentrate, or blends thereof; and/or wherein the one or more liquid ingredients include one or more liquid natural sweeteners.

In yet other embodiments or approaches of this disclosure, a method for preparing reduced sugar food product with a grain-based binder having 0 grams of intentionally added sugar per 60 gram serving is provided and wherein the reduced sugar food product is prepared by the method as described in any embodiment of this Summary. In other embodiments, the reduced sugar food product may also be essentially free of added sugar; and/or a granola agglomerate, cluster, bar, nugget, or bite; and/or includes about 4 weight percent or less total sugar.

### DESCRIPTION OF THE DRAWINGS

Numerous other objects, features, and advantages of the present disclosure will be apparent based upon the following description of the drawings.
FIGS. 1 to 6 show a schematic of a functionalized binder compositions and method of forming such binder composition that delays onset of viscosity increase in the context of a water-based binder compositions; and
FIGS. 7 to 11 are amylograph viscosity plots for model binder systems.

### DETAILED DESCRIPTION

The present disclosure relates to methods of making functionalized grain-based binder compositions with little to no intentionally added sugar according to claims. In some approaches, the binder compositions herein uniquely include grain-based components functionalized by including a hydration barrier to delay viscosity increase of the starch granule and to achieve an effective water-based binder when, in some approaches, using a cold syrup binder during manufacturing. In approaches, the binder composition is prepared in a new way to achieve a binder composition with little to no intentionally added sugar or sugar alcohols but suitable for water-based binders that effectively coat dry ingredients, such as granola, and in some systems without needing to heat the binder system for functionality. Such added sugars that can be avoided in the unique binders herein include, for instance, sucrose, fructose, dextrose, molasses, corn syrup, high fructose syrup, invert sugar, maple syrup, honey, and/or sugar alcohols that are commonly used in relatively high amounts in prior binder compositions and associated food bars, bites, clusters, and other cereal-bar type products. Due to the methods of preparation, the binders herein are functionalized to maintain a low processing viscosity even when hydrated with water (and/or at low processing temperatures) and other liquids so that the binders can maintain a low viscosity to effectively mix and coat a large content of dry or other inclusions. After mixing with dry components, the binder compositions are then activated during subsequent baking to allow the composition to transform into a traditional binder consistency to form the resultant bar, bite, cluster, or agglomerate of dry components and other inclusions.

The fat or oil used to coat or suspend the starch or high amylopectin starch may be any edible oil, fat, or shortening. Suitable examples include, but not limited to, vegetable oils like canola oil, sunflower oil, high oleic sunflower oil, soybean oil, corn oil, cottonseed oil, peanut oil, safflower oil, palm oil, coconut oil, rice bran oil, olive oil, and/or sesame oil. High oleic oils may include about 70 to about 90 weight percent of oleic acids.

The grain flour slurry coats a layer of the fat or oil on the grain particles. Without wishing to be limited by theory, this oil layer hinders the hydration of the grain particle and delays the onset of viscosity increase and/or gelation until later activation during baking. Advantageously, the grain flour slurry maintains a flowable viscosity even when water and/or other fluids are added to the slurry in the next processing step. For instance and as discussed further below in the Examples, the grain flour slurry and/or the binder compositions may have a viscosity in terms of torque in Brabender Units (BU) of less than 200 BU and, in some approaches, about 100 to 200 BU at temperatures less than 100°C, less than 80°C, or less than 70°C or between 25 and 100°C or any range therewithin. As described below, viscosity can be measured using a ViscoQuick universal viscometer from C.W. Brabender Instruments, Inc.

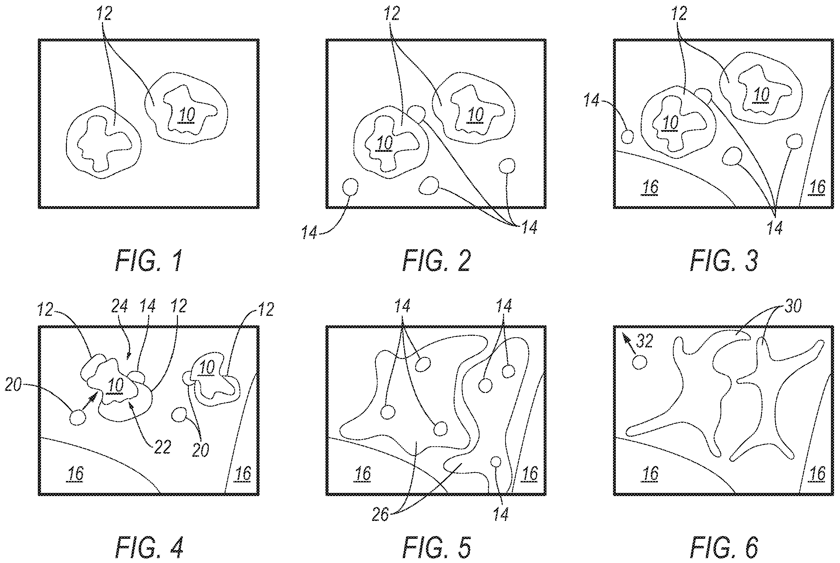

After the initial fat suspension of the starch to create the grain based slurry, remaining liquids/water may be added to the mixture to create the binder composition as shown schematically in FIG. 2. These further liquids may include, but not limited to, water, fruit juices, pastes and/or slurries (such as but not limited to dates, banana, apple, blueberry, strawberry, and the like), vegetable paste or slurry (such as but not limited to sweet potato, potato, and the like), natural sweeteners (such as but not limited to allulose, stevia, monk fruit, and the like). The binder composition is mixed for about 10 seconds to about 2 minutes, preferably, about 20 seconds to about 60 seconds to form the binder composition. This mixing may also be at ambient or room temperature. Additional mixing or high shear in this step can degrade the fat coating on the grain particle and lead to thickening and undesired viscosity increases.

As noted above, due to the initial fat or oil coating step of the selected grains, the binder compositions remain at a flowable viscosity at ambient temperatures even after the remaining liquids are blended with the grains. Without wishing to be limited by theory and as shown schematically in FIG. 2, the fat coating on the grain particle or granule hinders the migration of water or other fluid to the starch and delays the onset of gelation. After mixing, the viscosity of the binder composition is generally consistent to baby food and/or has a viscosity of less than 200 BU and preferably about 100 to about 200 BU as described above from a Brabender instrument.

In some approaches, the binder compositions may include about 10 to about 20 percent of the selected grain or grain flour, about 15 to about 35 percent oil or fat, and about 45 to about 75 percent other components/liquids as noted above. The moisture content of the binder composition at this point may be about 25 to about 30 weight percent. (Percentages of the binder are based on the binder slurry. The slurry is about 35-40 percent of the finished product).

Thereafter, the dry components/inclusions are added to the binder composition as shown schematically in FIG. 3. Dry components may include, but not limited to, fruit and/or fruit flavors (such as but not limited to banana, apple, berries, and the like), granola, oats, rolled oats, millet, spices, seasonings, other flavors, dried fruits, nuts, seeds, and the like as needed to achieve a particular cluster or agglomerate. The resultant cluster or agglomerate or other desired food type preferably has little to no intentionally added sugars, little to no intentionally added sugar syrups, and the like. Binding of the dry ingredients is achieved through careful section of components and the unique processing of the selected starches. Lastly, the composition is baked or heated to activate the binder to form a cohesive bar or cluster. Exemplary compositions can be found in Table 1 below. Such final compositions after baking may include about 35 to about 40 percent binder, about 60 to about 70 percent inclusions and dry components, and about 1 to about 10 percent moisture.

Overall, the resultant food products (i.e., granola cluster for instance) using the methods and flours herein may include about 2 to about 10 percent starch/flour, about 10 to about 25 percent liquid fat, about 5 to about 10 percent water and/or liquid neutral sweetener (that may include 50 to 75 percent water), about 0 to about 10 percent (or about 1 to 10 percent) fruit or vegetable puree, and about 60 to about 75 percent (or 60 to 70 percent) dry or solid ingredients (such as, but not limited to, granola, oats, nuts, fruit, protein, fiber, natural non-sugar sweeteners, flavors, etc.). Uniquely, the binders and food products herein include 0 grams of intentionally added sugar or no intentionally added sugar, which means for purposes of this disclosure about 1 percent or less intentionally added sugar, about 0.8 percent or less intentionally added sugar, about 0.5 percent or less intentionally added sugar, or no intentionally added sugar. In other approaches, the resultant food products herein also include less than about 10 percent total sugar or sugar alcohols, preferably, less than about 9 percent, more preferably less than about 5 percent, and in some instances, less than about 2 percent total sugar. Total sugar includes both intentionally added sugar as well as sugar provided along with other ingredients. Surprisingly, the methods and select ingredients herein produce, for instance, a clustered or agglomerate bar that closely mimics the organoleptic characteristics (appearance, texture, and mouthfeel) of clusters or agglomerates including sugar syrups or other added sugars even when the foods herein only include about 2 to about 10 weight percent total sugar and, preferably less than about 9 weight percent added sugar, and most preferably, no added sugar.

**Table 1: Exemplary Food Product Final Compositions**

| | **Range 1** | **Range 2** | **Range 3** |
|---|---|---|---|
| Pre-gelatinized high amylopectin starch | 4 to 10 % | 5 to 8 % | 5 to 8 % |
| Fat or oil | 5 to 15 % | 10 to 14 % | 5 to 8 % |
| Dry inclusions (i.e., granola, rolled oats, millet, nuts, seeds, almonds, dried fruits, flakes, etc.) | 50 to 70 % | 60 to 70 % | 60 to 70 % |
| Fruit, vegetable (i.e., whole, paste, puree, or concentrate, etc.) | 5 to 20 % | 10 to 15% | 10 to 15% |
| Liquid natural sweeteners | 0 to 10 % | 5 to 10 % | 5 to 10 % |
| Flavors and spices | 0 to 20% | 0 to 1 | 1 to 20 % |

As used herein, the term "grain flour slurry" means a conventional or pre-gelatinized grain or flour coated, mixed, or suspended in a fat or oil before adding other liquids. The grain or flour particle has a layer of fat or out surrounding the grain and may be an oil composition/slurry of about 30 to about 50 percent grains/flour and about 50 to about 70 percent fat or oil. The grain flour slurry is shown schematically in FIG. 1.

As used herein, the term "binder composition" means a material that produces or promotes cohesion of loosely assembled dry ingredients, and delivers viscosity and functional properties similar to that of conventional corn syrup or sugar binders. The binder compositions includes the grain flour slurry combined with at least one liquid. A binder composition is shown schematically in FIG. 2. In some approaches, the binder compositions of the present disclosure are essentially free of intentionally added sugars. The term "essentially free" means less than about 10%, less than about 9%, less than about 8%, less than about 7%, less than about 5%, less than about 2% by weight, less than about 1% by weight, or no intentionally added sugar within a binder composition. In other approaches, "essentially free" means less than about 1 grams per 60 grams, less than about 0.8 grams per 60 grams, less than about 0.7 grams per 60 grams, less than about 0.6 grams per 60 grams, less than about 0.5 gram per 60 grams of a food product, or no grams per 60 grams of a food product. Notably, the grain flour slurry and binder compositions herein form slurries having the low viscosity even at ambient or room temperature and, thus, permit cold processing of the granola cluster.

As used herein, the term "added sugar" refers to sugar that is intentionally added and includes carbohydrates obtained from such sources as sucrose, dextrose, maltose, dextrin, invert sugar, fructose, levulose, galactose, corn syrup solids, rice, tapioca, honey, molasses, malt extract, brown rice syrup, brown sugar syrup, invert syrup, glucose syrup, cane juice syrup, evaporated cane juice, agave syrup, beet sugar, maple syrup, turbinado, and coconut palm sugar that is intentionally added separate from other ingredients. As used herein, added sugar also includes sugar alcohols, such as sorbitol, mannitol, xylitol, isomalt, hydrogenated starch hydrolysates, maltitol, and the like, alone or in any combination. Intentionally added for purposes of this disclosure means the sugar or sugar alcohol is a separately added ingredient and not naturally included along with other food components or ingredients. Total sugar included both intentionally added sugar and sugar naturally included with a specific ingredient or component of the food product.

The term "moisture content" as used herein refers to the amount of moisture in a material. The moisture content of a material can be determined by A.O.C.S. (American Oil Chemists Society) Method Ba 2a-38 (1997). Moisture content is calculated according to the formula: Moisture content (%)=100x[loss in mass (grams)/mass of sample (grams)].

As used herein "thermal processing" or "thermally processed" means heating by any method. Thermal processing may be cooking, baking, frying, boiling, grilling, toasting, and the like. In some embodiments, thermal processing includes cooking and drying. In some embodiments, thermal processing includes forming and baking.

The terms "oil" and "fat" are used interchangeably herein to include any edible oil, fat, or shortening. The oil can be any edible oil or shortening, by way of example, any vegetable oil like canola oil, sunflower oil, high oleic sunflower oil, soybean oil, corn oil, cottonseed oil, peanut oil, safflower oil, palm oil, coconut oil, rice bran oil, olive oil, and/or sesame oil. The oil can be any shortening based on these oils and/or any fractions of these oils.

As used herein, the term "cooked grain flour" means one or more grain flours that are cooked, and optionally dried, to give a cooked grain flour and generally means the flour is pre-gelatinized. As defined herein, a "cooked grain flour" is not included in the definition of a "food product."

As used herein, the term "juice" includes, but is not limited to, aloe vera juice, wheatgrass juice, apple juice, cranberry juice, grape juice, grapefruit juice, kiwifruit juice, lemon juice, lime juice, melon juice, orange juice, papaya juice, pineapple juice, pomegranate juice, prune juice, strawberry juice, tomato juice, beet juice, carrot juice, celery juice, cucumber juice, parsley juice, spinach juice, turnip juice, and watercress juice.

As used herein, the term "puree" includes, but is not limited to, apple puree, arracacha puree, carrot puree, cassava puree, pea puree, potato puree, pumpkin puree, rutabaga puree, squash puree, corn puree, tomato puree, cucumber puree, guacamole, muesli, peanut butter, pesto, polenta, red bean paste, and saag.

As used herein, the term "natural sweetener" includes but is not limited to luohan guo (monk fruit), stevia, allulose, acesulfame potassium (Ace-K), aspartame, saccharin, cyclamates, sucralose, alitame, saccharin, neohesperidin dihydrochalcone, cyclamate, neotame, steviol glycoside sweeteners, such as rebaudioside A, rebaudioside B, rebaudioside C, rebaudioside D, rebaudioside E, rebaudioside F, dulcoside A, dulcoside B, rubusoside, stevioside, or steviolbioside, as well as various combinations thereof. The natural sweetener may include greater than about 50 percent water, and in some approaches, about 60 to about 75 percent water.

According to aspects of the present disclosure, unique binder compositions herein using the oil coated grain flours with little to no added sugar are blended with other components to form a bar or an agglomerate with one or more added liquid components and one or more dry ingredients. In some embodiments, the dry ingredients include one or more of grain flakes, rolled oats, extruded cereals, extruded legumes, fruits, nuts, ready-to-eat cereals (RTEC), and mixtures thereof. In other embodiments, the dry ingredients may include one or more inclusions. In other embodiments, the food product includes one or more inclusions. Suitable inclusions include, but are not limited to, potatoes, cheese, bacon, onions, protein puffs, protein isolate, puffed candy rice, cranberries, bananas, apricots, blueberries, almonds, sunflower seeds, coconut, peanuts, pecans, and the like, and mixtures thereof.

In embodiments, an exemplary bar or agglomerate (such as a clustered granola bar) may include about 10 to about 50 weight percent of the binder composition and about 50 to about 90 weight percent of the one or more dry ingredients (i.e., granola), based on the total weight of the bar or agglomerate. In other embodiments, the bar or agglomerate includes about 10%, about 15%, about 20%, about 25%, about 30%, about 35%, about 40%, about 45%, or about 50% by weight of the binder composition based on the total weight of the bar or agglomerate. In yet other embodiments, the bar or agglomerate includes about 50%, about 55%, about 60%, about 65%, about 70%, about 75%, about 80%, about 85%, or about 90% by weight of the one or more dry ingredients based on the total weight of the bar or agglomerate. In still other embodiments, the agglomerate includes the binder composition in an amount of about 15% to about 50%, about 15% to about 45%, about 20% to about 45%, about 25% to about 45%, about 25% to about 40%, about 30% to about 40%, or about 35% to about 45% by weight based on the total weight of the bar or agglomerate. In certain embodiments, the bar or agglomerate includes the one or more dry ingredients in an amount of about 50% to about 85%, about 50% to about 80%, about 55% to about 90%, about 60% to about 90%, about 50% to about 75%, about 70% to about 80%, about 70% to about 90%, or about 80% to about 90% by weight based on the total weight of the bar or agglomerate.

In some embodiments, the agglomerate or granola cluster has a moisture content before baking of about 10 % to about 20% by weight based on the total weight of the bar or agglomerate. In still other embodiments, the agglomerate or granola cluster has a moisture content after baking of about 1% to about 10% by weight based on the total weight of the bar or agglomerate.

The formed bar or agglomerate is (binder composition plus dry ingredients) thermally processed to activate the binder as generally shown in FIGS. 4 to 6 to obtain the cohesive food product of the present disclosure. In some embodiments, thermal processing involves forming and baking the agglomerate to obtain the food product. The food product may be processed into any suitable form, including but not limited to bars, cereals, squares, and snack bites. In particular embodiments, the food product after the thermal processing step has a final moisture content of about 1% to about 10%, about 1% to about 8%, about 1% to about 6%, or about 2% to about 6% by weight based on the total weight of the food product.

In some embodiments, the bar or agglomerate is baked at a temperature of about 93,33°C to about 176,67°C (200 °F to about 350 °F), about 98,89°C to 176,67°C (210 °F to about 350 °F), about 104,44 °C to about 176,67° C(220 °F to about 350 °F), about 110 °C to about 176,67 °C (230 °F to about 350 °F), about 115,56°C to about 176,67 °C (240 to about 350 °F), about 121,11 °C to about 176,67°C (250 °F to about 350 °F), about 126,67 °C to about 176,67 °C (260 °F to about 350 °F), about 132,22 °C to about 176,67 °C (270 °F to about 350 °F), about 137,78 °C to about 176,67 °C (280 °F to about 350 °F), about 148,89 °C to 176,67 °C (300 °F to about 350 °F), or about 160 °C to about 176,67 °C (320 °F to about 350 °F). In some embodiments, the agglomerate is baked for about 5 minutes to about 60 minutes, about 10 minutes to about 60 minutes, about 15 minutes to about 60 minutes, about 5 minutes to about 45 minutes, about 10 minutes to about 45 minutes, about 15 minutes to about 45 minutes, about 5 minutes to about 35 minutes, about 10 minutes to about 35 minutes, about 15 minutes to about 35 minutes, about 20 minutes to about 35 minutes, or about 25 minutes to about 35 minutes. Such thermal processing conditions are sufficient to activate the binder.

Turing to FIGS. 4 to 6 again and without wishing to be limited by theory, the thermal processing of the binder composition blended with the dry ingredients activates the binder or at least the starch granule within the binder. It is believed that steam generated from water and/or the water in the composition itself may gain access to the starch granule 20 via the thermal processing (i.e., baking). This baking or activation of the starch during thermal processing is believed to melt and/or degrade the fat coating 22 on the surface of the starch particle or granule thereby exposing the particle to water/steam hydration as exemplified by hydration arrows 24 in FIG. 4. Thereafter, water/steam migrates into the starch granule, which expands the granule 26 (*i.e.,* FIG. 5) to create a binder consistency and form a matrix or network 30 thereby providing cohesion of the food material/dries as generally shown in FIG. 6. Water may be evaporated or released as steam 32.

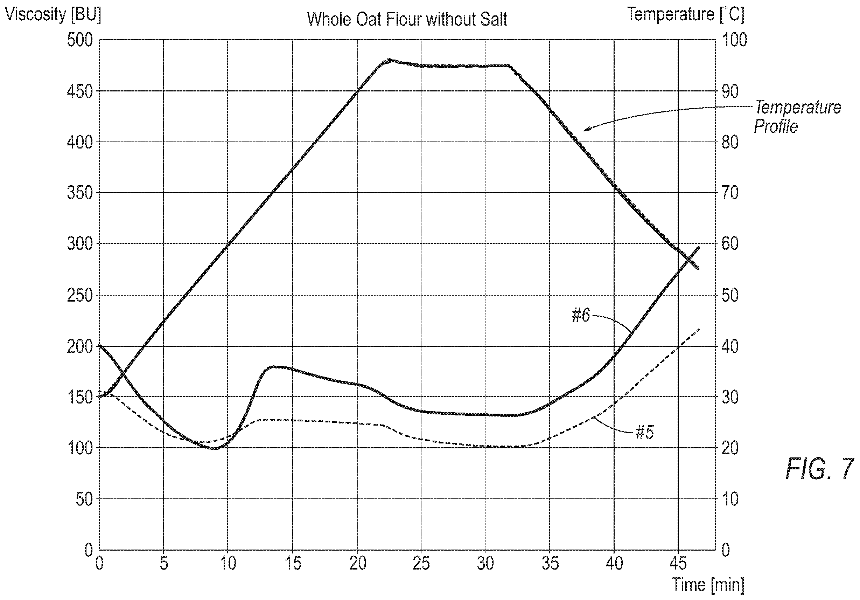

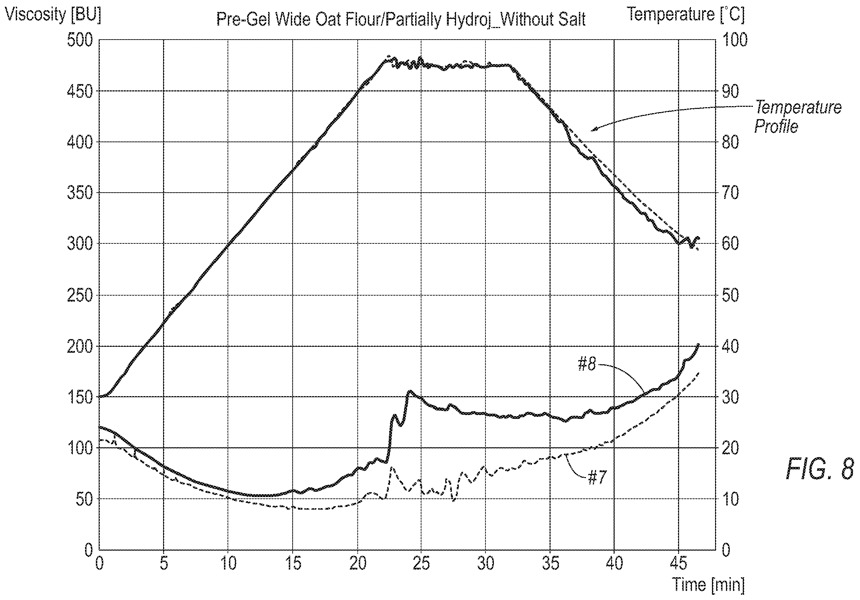

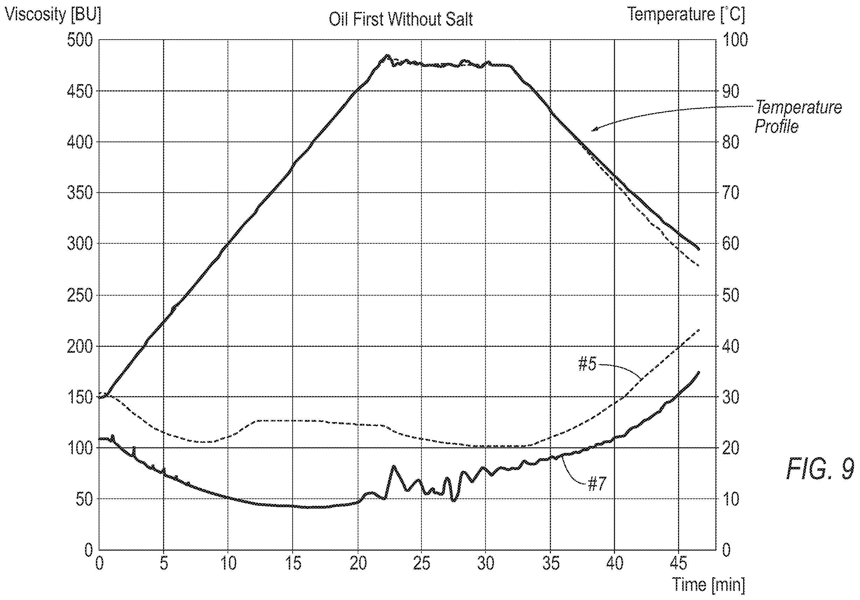

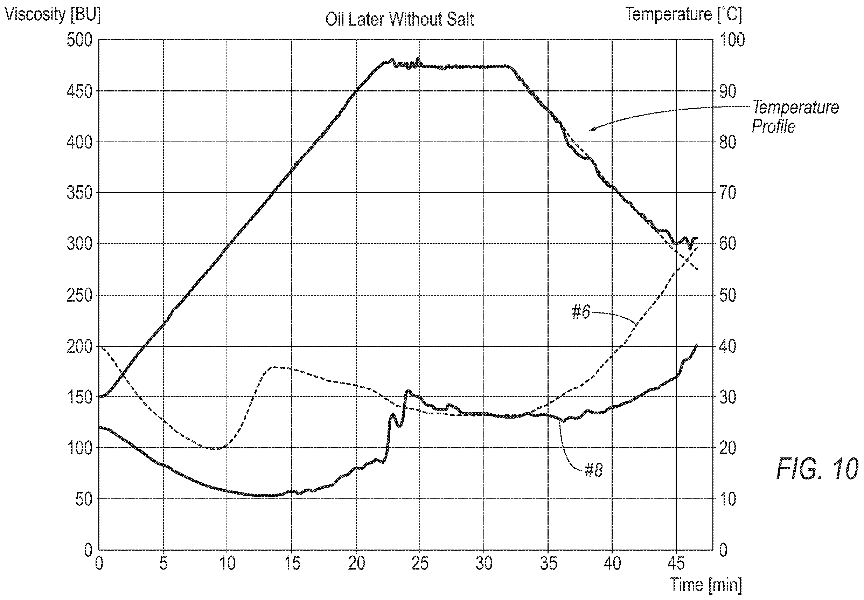

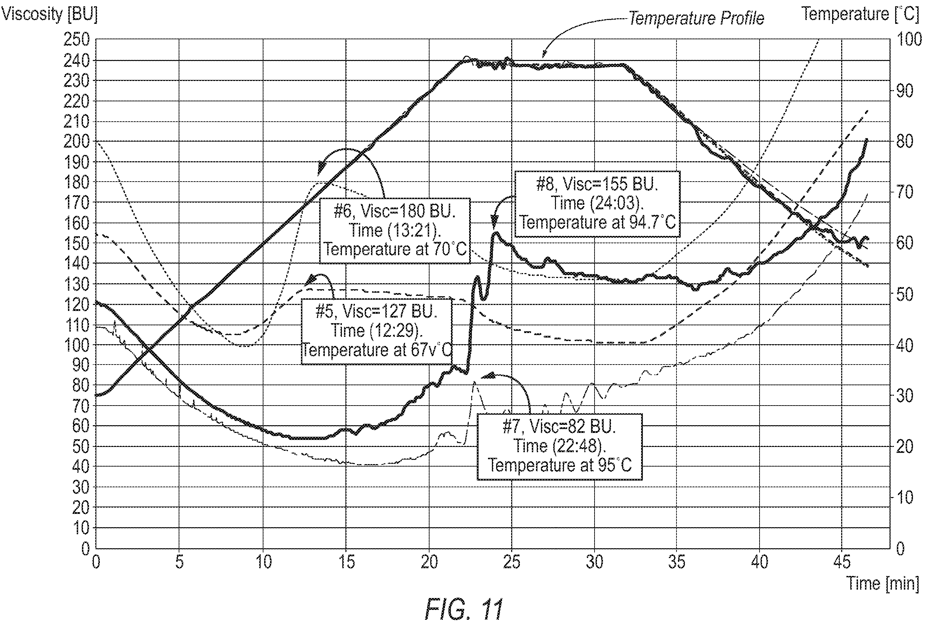

In some embodiments, the grain slurry and/or binder composition has an initial viscosity of less than about 200 BU (preferably, about 100 to about 200 BU in terms of Brabender torque units) before activation or thermal processing, a peak viscosity at about 60 to about 100 °C (binder temperature) of about 80 to about 180 BU (in other approaches, about 180 to about 130 BU), and a final viscosity of less than about 220 BU and/or about 150 to about 220 BU via amylograph analysis. FIGS 7 to 11 shown amylograph charts of exemplary model systems including starch, oil, and water as provided in the Examples below. As already explained, viscosity is measured using a Brabender ViscoQuick instrument from C.W. Brabender. The temperature profile of the Brabender analysis is heating from about 30°C to about 95°C at a rate of about 3°C/min, holding at about 90°C for about 10 minutes, and then cooling from about 90°C to about 50°C at a rate of about 3°C/min.

In some embodiments, the foods herein include optional ingredients such as additional fats, additional oil, salt, or flavorings. In embodiments, the binder composition or foods includes oil in an amount of about 1% to about 10%, about 2% to about 10%, about 2% to about 8%, about 2% to about 5%, or about 2% to about 4% based on the total weight of the binder composition. In certain embodiments, the binder composition or foods includes salt in an amount of about 0.1% to about 2%, about 0.2% to about 2%, about 0.5% to about 2%, about 0.1% to about 1%, or about 0.5% to about 1% by weight based on the total weight of the binder composition. In some embodiments, the binder composition or foods includes flavoring in an amount of about 0.1% to about 1%, about 0.25% to about 1%, about 0.5% to about 1%, or about 0.1% to about 0.5% by weight based on the total weight of the binder composition. In some embodiments, the binder composition includes an antioxidant in an amount of about 0.01% to about 0.2%, about 0.05% to about 0.2%, about 0.1% to about 0.2%, about 0.01% to about 0.1%, about 0.02% to about 0.1%, or about 0.05% to about 0.1% by weight based on the total weight of the binder composition.

The agglomerates and food products of the present disclosure may also include a variety of additives or inclusions that are blended with the binder compositions. Additives or inclusions can include combinations of, by way of non-limiting examples: fruit pieces, preferably dried; fruit juice concentrates; fruit purees; vegetable pieces; nuts or nut meats; seeds; legumes, preferably dried; raisins; carob or chocolate chips; yogurt chips; compound coating chips; white chocolate; coconut flakes; broken ready to eat cereal pieces (as non-limiting examples, rice bubbles or DX crisps); toffee; pretzel pieces; cheese pieces, preferably dried or crumbled; meat pieces, preferably dried (e.g., bacon bits), and other food pieces for flavor and novelty. The additives can also include additional sources of soluble fiber besides those found in the grain flours; these can include sources such as inulin, fructo-oligosaccharides, galacto-oligosaccharides, corn fiber, and wheat fiber. The additives can include additional protein such as protein flakes, protein nuggets, protein concentrates, and protein isolates from any sources including soy, whey, milk, egg, pea, and legume. The additives can include hydrocolloids such as xanthan gum, guar gum, locust bean gum, acacia gum, alginates, and carrageenans. The additives can include cellulosics such as microcrystalline cellulose, methylcellulose, ethyl cellulose, carboxymethylcellulose, and hydroxyl propyl methylcellulose.

Carbohydrates used for the current disclosure may constitute about 1% to about 90%, about 1% to about 80%, about 1% to about 75%, about 1% to about 50%, about 1% to about 25%, about 5% to about 20%, or about 8% to about 18% by weight of the cooked food product or food component. Suitable carbohydrates, if used, may include, but are not limited to, wheat flour, flour, dextrin, maltodextrin, carboxymethylcellulose (CMC), methylcellulose, hydroxypropylmethylcellulose (HPMC), guar gum, locust bean gum, xanthan gum, carrageenan, algins, levan, elsinan, pullulan, pectins, chitosan, and gum arabic; native starches such as corn starch, waxy maize starch, high-amylose corn starch, potato, tapioca, rice and wheat starch, modified starches such as those that have been acid modified, bleached, oxidized, esterified, etherified, and combinations thereof.

An optional emulsifier can be included and may be any used in typical thermal processing methods and includes, by way of example only, lecithin, diacetyl tartaric ester of monoglyceride (DATEM), mono-and di-glycerides, and sodium stearoyl lactylate. In some embodiments, the emulsifier (if used) is present in an amount up to about 0.5%, about 0.05% to about 0.5%, or about 0.1% to about 0.4% by weight based on the total weight of the cooked food product.

In other embodiments, the compositions herein include a natural or high intensity sweetener, including but not limited to allulose, stevia, Monk Fruit Extract, and sucralose may be added to enhance flavor. In some embodiments, flavor modifies such as SweetGEM or TasteGEM may also be used to enhance flavor. In some embodiments, the high intensity sweeteners may be included in an amount of about 0.01 to about 10% by weight based on the total weight of the cooked food product depending on the sweetness intensity.

Optional colorants or coloring agents used for the current disclosure can be used in any suitable amount to produce a desired color. Further, the cooked food products of the present disclosure may have multi-colored patterns and/or other related designs or shapes to produce color contrasts. While colorants or coloring agents may be any conventional colorant, preferred components include natural colorants such as fruit or vegetable-obtained colorants. If used, the coloring agents may constitute about 0.01% to about 2% by weight of the cooked food product.

Optional preservatives may be used in the food products of the present disclosure if needed to ensure the safety and quality of the cooked food product. Any conventional preservative may be used, but are preferably natural preservatives such as natural antioxidants including but not limited to rosemary extract, mixed tocopherols, and green tea extract and the like. If used, such preservatives or the antioxidants may be present in an amount of about 0.01% to about 1% by weight of the cooked food product.

### EXAMPLES

The following examples are illustrative of exemplary embodiments of the disclosure. In these examples, as well as elsewhere in this application, all ratios, parts, and percentages are by weight unless otherwise indicated. It is intended that these examples are being presented for the purpose of illustration only and are not intended to limit the scope of the invention disclosed herein.

### EXAMPLE 1

Exemplary multi-step methods to form granola products are show below in Table 2 below. A Hobart Mixer or equivalent may be used for the blending. A first step blends hydrolyzed whole oat flour with high oleic sunflower oil for 30 second on high to prepare a grain slurry. In a second step, additional liquids are blended with the grain slurry to form a binder composition. The binder composition is then blended for no more than 30 seconds on slow to medium speed. Lastly, dry ingredients are added to the binder composition to form unbaked granola compositions that form loose clumps that are not held together firmly like a dough. The unbaked granola compositions are formed into a sheet and then baked for 25 to 35 minutes at 300° F to 350 °F for form the final product. The finished products had a moisture content of about 1 to about 3 percent.

**Table 2: Exemplary Formulations**

| | **Sample 1, weight %** | **Sample 2, weight %** |
|---|---|---|
| **Step 1: Grain Flour Slurry** | | |
| Fat/Oil | 12.2 | 6.8 |
| Pre-gelatinized Whole Oat Flour | 5.4 | 5.5 |

| **Step 2: Binder Composition** | | |
|---|---|---|
| Fruit Puree | 11.0 | 11.7 |
| Natural Sweetener | 7.5* | 8.5** |
| Flavors, Seasonings | 1.3 | 1.1 |

| **Step 3: Dries** | | |
|---|---|---|
| Oats | 50.9 | 38.4 |
| Millet | 5.0 | 4 |
| Nuts/seeds | 4.3 | 8.9 |
| Fruit | 2.4 | - |

| **Step 4: Paste Addition** | | |
|---|---|---|
| Nut paste | - | 15 |

| | | |
|---|---|---|
| *blend of allusose and monk fruit **allulose | | |

Even without added sugars or sugar alcohols in the binder compositions, the resultant food products of Table 2 sufficiently coated the dry ingredients and form a cohesive granola bar upon baking and activating the binder.

### EXAMPLE 2

Model systems were prepared to investigate initial, peak, and final viscosity of compositions using different flours and with oil added before or after water hydration. Inventive methods that coated the flour first with an oil minimized both the initial, peak, and final viscosity. The model systems evaluated each included about 317 grams of oil, about 140 grams of flour, about 143 grams of water to make approximately a 600 gram sample. The procedure involved an "oil first" analysis included mixing the flour with oil for about 30 second using a Hobart Mixer (or equivalent), adding the water, and then mixing for another 30 seconds before the amylograph viscosity analysis. The procedure for the comparative "oil later" analysis involved mixing the flour with the water for about 30 seconds, adding the oil, and then mixing for another 30 seconds before the amylograph viscosity analysis. Amylograph and viscosity were analyzed using a Brabender ViscoQuick from C.W. Brabender with a temperature profile that included heating from about 30 °C to about 95 °C at a rate of about 3 °C/min, then holding at about 90 °C for about 10 min. After heating, the paste was cooled down from about 90 °C to about 50 °C at a rate about 3 °C/min. Viscosity is reported in Brabender torque units or BU as reported by the instrument. Flour samples of Table 3 below were evaluated in the model binder systems of this Example per the procedures above.

**Table 3: Model binder system**

| **Sample ID** | **Procedure** | **Flour Type Evaluated** |
|---|---|---|
| #1 | Oil First | Conventional Rice |
| #2 | Oil Later | Conventional Rice |
| #3 | Oil First | Rice - Pre-Gelatinized |
| #4 | Oil Later | Rice - Pre-Gelatinized |
| #5 | Oil First | Conventional Whole Oat |
| #6 | Oil Later | Conventional Whole Oat |
| #7 | Oil First | Whole Oat - Pre-Gelatinized |
| #8 | Oil Later | Whole Oat - Pre-Gelatinized |

Samples 1 to 4 could not be evaluated for amylograph viscosity. Samples 1 and 2 resulted in a thick paste and oil separated out even when the oil was added first. Samples 3 and 4 resulted in a very strong paste/glue even when the oil was added first. Sample 5 to 8 were evaluated for an amylograph viscosity profile and the results are provided in Table 4 below and shown in FIGS. 7 to 11.

**Table 4: Amylograph Results**

| **Sample ID** | **Initial Viscosity (BU)** | **Peak Viscosity (BU)** | **Amylograph Peak Time (min)** | **Peak Viscosity Temperature (C)** | **Final Viscosity (BU)** |
|---|---|---|---|---|---|
| #5 | 155 | 127 | 12.29 | 67 | 215 |
| #6 | 200 | 180 | 13.21 | 70 | 296 |
| #7 | 110 | 82 | 22.48 | 95 | 174 |
| #8 | 120 | 155 | 24.03 | 94.7 | 201 |

The data of Table 4 shows that the "oil first" procedures of samples 5 and 7 that coats the flour with fat before water addition keeps the initial, peak, and final viscosity lower. Additionally, a pre-gelatinized flour versus a conventional flour also keeps the viscosity even lower.

In the method explained, in any of the possible combinations, the one or more liquid ingredients include one or more liquid natural sweeteners.

It is object of the present invention a reduced sugar food product with a grain-based binder having 0 grams of intentionally added sugar per 60 gram serving and wherein the reduced sugar food product is prepared by the method exposed.

Optionally the reduced sugar food product is essentially free of added sugar.

Additionally, the reduced sugar food product is a granola agglomerate, cluster, bar, nugget, or bite.

Complementarily the reduced sugar food product includes about 4 weight percent or less total sugar.

It is noted that, as used in this specification and the appended claims, the singular forms "a," "an," and "the," include plural referents unless expressly and unequivocally limited to one referent. Thus, for example, reference to "an antioxidant" includes two or more different antioxidants. As used herein, the term "include" and its grammatical variants are intended to be non-limiting, such that recitation of items in a list is not to the exclusion of other like items that can be substituted or added to the listed items.

## Claims

1. A method for preparing a food product including a grain-based binder and being essentially free of intentionally added sugars and/or sugar alcohol, the method comprising:
coating a grain flour with a fat or oil to form a grain flour slurry wherein a grain particle is protected with a layer of the fat or oil wherein the grain flour is a pre-gelatinized whole oat flour and wherein the grain flour slurry includes about 30 to about 50 weight percent grain flour and about 50 to about 70 weight percent fat or oil based on the total weight of the grain flour slurry;
combining the grain flour slurry with one or more liquid ingredients to form a binder composition wherein the binder composition including the grain flour slurry maintains a viscosity of about 200 Brabender torque units or less before thermal processing;
wherein viscosity is measured using a Brabender ViscoQuick instrument from C.W. Brabender, Inc., wherein the temperature profile of the Brabender analysis is heating from about 30°C to about 95°C at a rate of about 3°C/minute, holding at about 90°C for about 10 minutes, and then cooling from about 90°C to about 50°C at a rate of about 3°C/minute.
mixing the binder composition and one or more dry ingredients to form an agglomerate; and
thermally processing the agglomerate to activate the grain flour to increase the binder viscosity to form the agglomerate into a cohesive food product.

2. The method of claim 1, wherein the thermally processing includes baking at a temperature of about 148,89 °C to about 176,67 °C (300 °F to about 350 °F) for about 5 minutes to about 60 minutes.

3. The method of any preceding claim, wherein the thermally processing generates steam to at least partially degrade the layer of fat or oil coating the grain particle to allow hydration of the grain flour particle.

4. The method of any preceding claim, wherein the food product includes about 30 to about 50 percent of the binder composition and about 50 to about 70 percent of the dry ingredients based on the total weight of the food product.

5. The method of any preceding claim, wherein the binder composition has a viscosity of 200 Brabender torque units or less at temperatures about 100 °C or less and, preferably, as a maximum viscosity of 80 to 130 Brabender torque units at temperatures of about 95 °C and, preferably, at temperatures of about 60 to about 95 °C.

6. The method of claim 1, wherein the pre-gelatinized whole oat flour is a high amylopectin containing pre-gelatinized whole oat flour.

7. The method of any preceding claim, wherein the pre-gelatinized whole oat flour has about 1 to about 4 percent water, about 5 to about 10 fat, about 10 to about 15 percent protein, and less than about 1 percent fiber.

8. The method of any preceding claim, wherein the oil or fat is selected from the group consisting of a canola oil, sunflower oil, soybean oil, corn oil, cottonseed oil, peanut oil, safflower oil, palm oil, coconut oil, rice bran oil, olive oil, and/or sesame oil, and combinations thereof.

9. The method of claim 6, wherein the high amylopectin whole oat flour includes an amylopectin to amylose ratio of about 75 to 98 percent amylopectin and about 2 to about 25 percent amylose.

10. The method of claim 9, wherein the high amylopectin whole oat flour has about 1 to about 4 percent water, about 5 to about 10 fat, about 10 to about 15 percent protein, and less than about 0.5 percent fiber.

11. The method of any preceding claim, wherein the one or more liquid ingredients include fruit juice, fruit puree, fruit concentrate, or blends thereof.

## Patentansprüche

1. Verfahren zur Herstellung eines Lebensmittelprodukts, das ein Bindemittel auf Getreidebasis umfasst und im Wesentlichen frei von absichtlich zugesetzten Zuckern und/oder Zuckeralkohol ist, wobei das Verfahren Folgendes umfasst:
Beschichten eines Getreidemehls mit einem Fett oder Öl, um eine Getreidemehlaufschlämmung zu bilden, wobei ein Getreideteilchen mit einer Schicht des Fetts oder Öls geschützt wird, wobei das Getreidemehl ein vorgelatiniertes Hafervollkornmehl ist und wobei die Getreidemehlaufschlämmung etwa 30 bis etwa 50 Gewichtsprozent Getreidemehl und etwa 50 bis etwa 70 Gewichtsprozent Fett oder Öl, bezogen auf das Gesamtgewicht der Getreidemehlaufschlämmung, umfasst;
Kombinieren der Getreidemehlaufschlämmung mit einem oder mehreren flüssigen Bestandteilen, um eine Bindemittelzusammensetzung zu bilden, wobei die Bindemittelzusammensetzung, die die Getreidemehlaufschlämmung umfasst, vor der thermischen Aufbereitung eine Viskosität von etwa 200 Brabender-Drehmomenteinheiten oder weniger beibehält,
wobei die Viskosität unter Verwendung eines Brabender ViscoQuick-Instruments von C.W. Brabender, Inc. gemessen wird, wobei das Temperaturprofil der Brabender-Analyse Folgendes umfasst: das Erwärmen von etwa 30 °C auf etwa 95 °C mit einer Rate von etwa 3 °C/Minute, das Halten bei etwa 90 °C für etwa 10 Minuten und das anschließende Abkühlen von etwa 90 °C auf etwa 50 °C mit einer Rate von etwa 3 °C/Minute,
das Mischen der Bindemittelzusammensetzung und eines oder mehrerer trockener Bestandteile zur Bildung eines Agglomerats; und
das thermische Aufbereiten des Agglomerats zur Aktivierung des Getreidemehls, um die Viskosität des Bindemittels zu erhöhen und das Agglomerat zu einem kohäsiven Lebensmittelprodukt zu formen.

2. Verfahren nach Anspruch 1, wobei die thermische Aufbereitung das Backen bei einer Temperatur von etwa 148,89 °C bis etwa 176,67 °C (300 °F bis etwa 350 °F) für etwa 5 Minuten bis etwa 60 Minuten umfasst.

3. Verfahren nach einem der vorhergehenden Ansprüche, wobei die thermische Aufbereitung Dampf erzeugt, um die Fett- oder Ölschicht, die das Getreideteilchen überzieht, zumindest teilweise abzubauen, um die Hydratation des Getreidemehlteilchens zu erlauben.

4. Verfahren nach einem der vorhergehenden Ansprüche, wobei das Lebensmittelprodukt etwa 30 bis etwa 50 Prozent der Bindemittelzusammensetzung und etwa 50 bis etwa 70 Prozent der trockenen Bestandteile, bezogen auf das Gesamtgewicht des Lebensmittelprodukts, umfasst.

5. Verfahren nach einem der vorhergehenden Ansprüche, wobei die Bindemittelzusammensetzung eine Viskosität von 200 Brabender-Drehmomenteinheiten oder weniger bei Temperaturen von etwa 100 °C oder weniger und vorzugsweise eine maximale Viskosität von 80 bis 130 Brabender-Drehmomenteinheiten bei Temperaturen von etwa 95 °C und vorzugsweise bei Temperaturen von etwa 60 bis etwa 95 °C aufweist.

6. Verfahren nach Anspruch 1, wobei das vorgelatinierte Hafervollkornmehl ein vorgelatiniertes Hafervollkornmehl mit hohem Amylopektingehalt ist.

7. Verfahren nach einem der vorhergehenden Ansprüche, wobei das vorgelatinierte Hafervollkornmehl etwa 1 bis etwa 4 Prozent Wasser, etwa 5 bis etwa 10 Prozent Fett, etwa 10 bis etwa 15 Prozent Protein und weniger als etwa 1 Prozent Ballaststoffe aufweist.

8. Verfahren nach einem der vorhergehenden Ansprüche, wobei das Öl oder Fett aus der Gruppe ausgewählt ist, die aus Rapsöl, Sonnenblumenöl, Sojabohnenöl, Maisöl, Baumwollsamenöl, Erdnussöl, Distelöl, Palmöl, Kokosnussöl, Reiskleieöl, Olivenöl und/oder Sesamöl und Kombinationen davon besteht.

9. Verfahren nach Anspruch 6, wobei das Hafervollkornmehl mit hohem Amylopektinanteil ein Verhältnis von Amylopektin zu Amylose von etwa 75 bis 98 Prozent Amylopektin zu etwa 2 bis etwa 25 Prozent Amylose umfasst.

10. Verfahren nach Anspruch 9, wobei das Hafervollkornmehl mit hohem Amylopektinanteil etwa 1 bis etwa 4 Prozent Wasser, etwa 5 bis etwa 10 Prozent Fett, etwa 10 bis etwa 15 Prozent Protein und weniger als etwa 0,5 Prozent Ballaststoffe aufweist.

11. Verfahren nach einem der vorhergehenden Ansprüche, wobei der eine oder die mehreren flüssigen Bestandteile Fruchtsaft, Fruchtpüree, Fruchtkonzentrat oder Mischungen davon umfassen.

## Revendications

1. Procédé de préparation d'un produit alimentaire incluant un liant à base de céréale et qui est essentiellement exempt de sucres et/ou alcool de sucre intentionnellement ajoutés, le procédé comprenant :
l'enrobage d'une farine de céréale avec une graisse ou de l'huile pour former une bouillie de farine de céréale, une particule de céréale étant protégée par une couche de la graisse ou de l'huile, la farine de céréale étant une farine d'avoine complète prégélatinisée et la bouillie de farine de céréale incluant environ 30 à environ 50 pour cent en poids de farine de céréale et environ 50 à environ 70 pour cent en poids de graisse ou d'huile par rapport au poids total de la bouillie de farine de céréale ;
la combinaison de la bouillie de farine de céréale avec un ou plusieurs ingrédients liquides pour former une composition de liant, la composition de liant incluant la bouillie de farine de céréale conservant une viscosité inférieure ou égale à environ 200 unités de couple Brabender avant traitement thermique ;
la viscosité étant mesurée à l'aide d'un instrument ViscoQuick de Brabender provenant de C.W. Brabender, Inc., le profil de température de l'analyse Brabender étant un chauffage allant d'environ 30 °C à environ 95 °C à une vitesse d'environ 3 °C/minute, le maintien à environ 90 °C pendant environ 10 minutes, puis un refroidissement allant d'environ 90 °C à environ 50 °C à une vitesse d'environ 3 °C/minute ;
le mélange de la composition de liant et d'un ou plusieurs ingrédients secs pour former un agglomérat ; et
le traitement thermique de l'agglomérat pour activer la farine de céréale pour augmenter la viscosité du liant pour transformer l'agglomérat en un produit alimentaire cohésif.

2. Procédé selon la revendication 1, dans lequel le traitement thermique inclut une cuisson à une température d'environ 148,89 °C à environ 176,67 °C (300 °F à environ 350 °F) pendant environ 5 minutes à environ 60 minutes.

3. Procédé selon une quelconque revendication précédente, dans lequel le traitement thermique génère de la vapeur d'eau pour dégrader au moins partiellement la couche de graisse ou d'huile enrobant la particule de céréale pour permettre l'hydratation de la particule de farine de céréale.

4. Procédé selon une quelconque revendication précédente, dans lequel le produit alimentaire inclut environ 30 à environ 50 pour cent de la composition de liant et environ 50 à environ 70 pour cent des ingrédients secs par rapport au poids total du produit alimentaire.

5. Procédé selon une quelconque revendication précédente, dans lequel la composition de liant a une viscosité inférieure ou égale à 200 unités de couple Brabender à des températures inférieures ou égales à environ 100 °C et, de préférence, en tant que viscosité maximale de 80 à 130 unités de couple Brabender à des températures d'environ 95 °C et, de préférence, à des températures d'environ 60 à environ 95 °C.

6. Procédé selon la revendication 1, dans lequel la farine d'avoine complète prégélatinisée est une farine d'avoine complète prégélatinisée contenant une haute teneur en amylopectine.

7. Procédé selon une quelconque revendication précédente, dans lequel la farine d'avoine complète prégélatinisée a environ 1 à environ 4 pour cent d'eau, environ 5 à environ 10 de graisse, environ 10 à environ 15 pour cent de protéines et moins d'environ 1 pour cent de fibres.

8. Procédé selon une quelconque revendication précédente, dans lequel l'huile ou la graisse est choisie dans le groupe constitué par l'huile de colza, l'huile de tournesol, l'huile de soja, l'huile de blé, l'huile de coton, l'huile d'arachide, l'huile de carthame, l'huile de palme, l'huile de noix de coco, l'huile de son de riz, l'huile d'olive et/ou l'huile de sésame et les combinaisons de celles-ci.

9. Procédé selon la revendication 6, dans lequel la farine d'avoine complète à haute teneur en amylopectine inclut un rapport de l'amylopectine à l'amylose d'environ 75 à 98 pour cent d'amylopectine et d'environ 2 à environ 25 pour cent d'amylose.

10. Procédé selon la revendication 9, dans lequel la farine d'avoine complète à haute teneur en amylopectine a environ 1 à environ 4 pour cent d'eau, environ 5 à environ 10 de graisse, environ 10 à environ 15 pour cent de protéines et moins d'environ 0,5 pour cent de fibres.

11. Procédé selon une quelconque revendication précédente, dans lequel le ou les ingrédients liquides incluent du jus de fruit, de la purée de fruit, du concentré de fruit ou des associations de ceux-ci.
